(19) Europäisches Patentamt
European Patent Office
Office européen des brevets

(11) Veröffentlichungsnummer : **0 486 820 B1**

(12) **EUROPÄISCHE PATENTSCHRIFT**

(45) Veröffentlichungstag der Patentschrift :
**20.09.95 Patentblatt 95/38**

(51) Int. Cl.$^6$ : **G11B 5/702**

(21) Anmeldenummer : **91117883.8**

(22) Anmeldetag : **19.10.91**

# (54) Magnetischer Aufzeichnungsträger.

(30) Priorität : **01.11.90 DE 4034747**

(43) Veröffentlichungstag der Anmeldung :
**27.05.92 Patentblatt 92/22**

(45) Bekanntmachung des Hinweises auf die Patenterteilung :
**20.09.95 Patentblatt 95/38**

(84) Benannte Vertragsstaaten :
**BE DE FR GB IT LU NL**

(56) Entgegenhaltungen :
**EP-A- 0 112 924**
**EP-A- 0 112 925**
**EP-A- 0 197 608**
**DD-A- 262 301**
**DD-A- 266 200**
**DD-A- 281 045**
**DE-A- 3 128 830**
**DE-A- 3 630 955**
**DE-B- 1 005 754**
**PATENT ABSTRACTS OF JAPAN vol. 8, no. 55 (P-260)(1492) 13. März 1984**
**PATENT ABSTRACTS OF JAPAN vol. 6, no. 133 (P-129)(1011) 20. Juli 1982**

(56) Entgegenhaltungen :
**PATENT ABSTRACTS OF JAPAN vol. 8, no. 101 (P-273)(1538) 12. Mai 1984**
**CHEMICAL ABSTRACTS, vol. 94, no. 4, 26. Januar 1981, Columbus, Ohio, US; abstract no. 24141P, Seite 581 ;Spalte 1 ;**

(73) Patentinhaber : **BASF Magnetics GmbH**
**Dynamostrasse 3**
**D-68165 Mannheim (DE)**

(72) Erfinder : **Schroer, Wolf-Dieter, Dr.**
**Hofbrunnstrasse 4**
**W-8000 München 70 (DE)**
Erfinder : **Vass, Attila, Dr.**
**Plinganerstrasse 18 a**
**W-8000 München 70 (DE)**
Erfinder : **Sauter, Jürgen**
**Appenzellerstrasse 98**
**W-8000 München 71 (DE)**
Erfinder : **Schmidt, Jürgen**
**Sailerstrasse 20**
**W-8000 München 40 (DE)**
Erfinder : **Kuntz, Günther**
**Leoprechtingstrasse 40**
**W-8000 München 83 (DE)**

(74) Vertreter : **Langfinger, Klaus-Dieter, Dr. et al**
**BASF Aktiengesellschaft,**
**Patentabteilung ZDX - C 6**
**D-67056 Ludwigshafen (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf einen magnetischen Aufzeichnungsträger, bestehend aus einem unmagnetischen Schichtträger und mindestens einer darauf aufgebrachten magnetischen Dispersion, bei der feinteilige magnetische Pigmente mit einem BET-Wert von mehr als 35 $m^2/g$ in einem polymeren Bindemittel dispergiert sind und wobei außerdem als Dispergierhilfsmittel ein bestimmter Phosphorsäureester eingesetzt ist sowie auf ein Verfahren zur Herstellung eines magnetischen Aufzeichnungsträgers.

Die Entwicklung magnetischer Aufzeichnungsträger geht schon seit Jahren in die Richtung höherer Aufzeichnungsdichte und verbesserten Signal-/Rauschabstandes. Um diese Eigenschaften zu verbessern, muß der Füllgrad der magnetischen Schicht erhöht und eine gute Oberflächenglätte durch Verbesserung der Dispergierung und der Ausrichtung der feinteiligen magnetischen Pigmente, welche ausgezeichnete magnetische Eigenschaften besitzen müssen, erzielt werden.

Eine weitere Anforderung an magnetische Aufzeichnungsträger mit hoher Aufzeichnungsdichte ist eine störteilchenfreie Schicht. Diese ist einerseits nur mit magnetischen Dispersionen zu erreichen, die keine Agglomerate enthalten. Andererseits ist die Filtration der magnetischen Dispersion mit Filtern extrem geringer Porengröße (um 5 µm) notwendig.

Um die gewünschten Dispergiereigenschaften zu erreichen, ist unbedingte Voraussetzung, daß bestimmte Bindemittel eingesetzt werden, welche sowohl gute Bindungseigenschaften wie auch gute Dispergiereigenschaften für das magnetische Pigment besitzen. Solche dispergieraktiven Verbindungen werden im folgenden Dispergierharze genannt. Dabei wird in den magnetischen Dispersionen ein gewisser Anteil des polymeren Bindemittels, zwischen 2 und 100 %, durch aktive hoch- oder niedermolekulare Dispergierharze ersetzt, welche eine sehr gute Affinität zum feinteiligen magnetischen Pigmente haben. Hierbei werden unter den Dispergierharzen chemische Verbindungen verstanden, die durch Polymerisation, Polykondensation oder Polyaddition aus Monomerbausteinen erhalten werden und die wenigstens eine polare zur Adsorption an der Oberfläche des magnetischen Pigments geeignete Gruppe enthalten. Dadurch wird jedoch die Viskosität der magnetischen Dispersion unter Umständen extrem erhöht, wodurch Schwierigkeiten auftreten, die umso größer sind, je feinteiliger das magnetische Pigment ist und die weiter unten näher beschrieben werden.

Insbesondere magnetische Dispersionen, welche feinteilige Metallpulver mit einem BET-Wert von mehr als 35 $m^2/g$ als magnetisches Pigment enthalten, können mit den herkömmlichen Rezepturbestandteilen wie polymeren Bindemittel eine hohe Fließgrenze aufweisen, weshalb sie sich nur schwer und mit besonderen Filtrieraggregaten filtrieren lassen, insbesondere wenn die magnetische Dispersion eine lange Standzeit während der Produktion aufweist, was beispielsweise bei einer Produktionsunterbrechung ohne weiteres vorkommen kann.

Es hat nicht an Versuchen gefehlt, die notwendige Homogenität der Dispersion zu erreichen.

Durch intensive Mahlung der magnetischen Dispersion läßt sich ein gewisser Grad an Homogenität erreichen, durch unterschiedlich starke Verhakung beziehungsweise Versinterung der Pigmentagglomerate ist der leichter aufteilbare Pigmentanteil jedoch bereits stark übermahlen, ehe der versinterte Pigmentnadelanteil ausreichend zerkleinert ist. Insbesondere bei Metallpigmenten kann die gegen Oxidation stabilisierende Oberflächenschicht zerstört werden.

So wird in JP 62-041 274 der erforderlichen unterschiedlichen Dispergierintensität über die Gesamtmahldauer zwar dadurch Rechnung getragen, daß zu bestimmten Zeitpunkten der Dispergierung unterschiedliche Mengen an Lösemittel zugesetzt werden. Dies hat jedoch den Nachteil, daß während der Mahldauer die Rezepturkomponenten in unterschiedlicher Konzentration vorliegen, wodurch eine uneinheitliche Adsorption in Kauf genommen werden muß, was zu lagerinstabilen Dispersionen führt.

In JP-N 56/148 727 wird nach Anpassung der Dispersionsviskosität durch reines Lösemittel noch ein restlicher Anteil von Dispergierhilfsmittel vor der Dispergierung zugesetzt, Die schrittweise Zugabe von Lösemittel während der Dispergierung, wie in der JP 61/090330 beschrieben, ermöglicht nur die erforderlichen Pastenviskositäten einer Kneterdispergierung.

In der DE-OS 39 05 910 wird vorgeschlagen, während der Feindispergierung der magnetischen Dispersion in mehreren Stufen gerade soviel Dispergierhilfsmittel zuzusetzen, wie laufend Pigmentoberfläche durch den Dispergierprozeß neu gebildet wird. Aus der DE 10 05 754 ist bekannt, zur Viskositätserniedrigung der mit konventionellen Bindemitteln aufgebauten Dispersion bestimmte Phosphorsäureester zuzusetzen. Weiterhin ist aus der DE-OS 25 35 277 sowie der US 4 533 565 bekannt, die Oberfläche der magnetischen Pigmente mit bestimmten Verbindungen wie polymerisierbaren Alkylenoxiden oder Verbindungen mit polaren Gruppen zu belegen, bevor sie zur magnetischen Dispersion zugegeben werden. In der DE 22 50 384 sind für einen magnetischen Aufzeichnungsträger, welcher als magnetisches Pigment $CrO_2$ enthält, als Dispergierhilfsmittel Alkylarylsulfonsäuren allein oder im Gemisch mit Phosphorsäureestern oder mit alkoxylierten Alkylphenolen beschrieben. Die dort beschriebenen Dispergierhilfsmittel sind teilweise Naturprodukte, wie das bekannte Lecithin, welches je nach Charge in seiner Zusammensetzung wechselt und außerdem zum Gebrauch in magnetischen Aufzeichnungsträgern nur in hochgereinigter Form anwendbar ist. Weiterhin ist in dieser Schrift ein Gemisch von Mono- und Diestern der Phosphorsäure beschrieben. Dieses Gemisch hat als Nachteil einen relativ hohen unwirksamen Neutralanteil von nicht mit Phosphorsäure umgesetzten Alkoholen.

In der EP A 0 197 608 ist ein magnetischer Aufzeichnungträger beschrieben, bei welchem zur Erreichung einer hohen Signalwiedergabe insbesondere bei kurzen Wellenlängen sowie eines hohen Signal-/Rauschverhältnisses bestimmte niedermolekulare Phosphorsäureester in einer Menge von 0,5 bis 6 %, bezogen auf das magnetische Pigment der Dispersion, zugesetzt werden.

Aus der DE A 36 30 955 ist ein magnetischer Überzug bekannt, bestehend aus Vinylchlorid-Copolymerharzen mit Epoxigruppen als Bindemittel, denen zur Verbesserung der Wärmestabilität als Additiv entweder Phosphorsäureesterverbindungen, Carboxylsäureverbindungen mit einem PK-Wert von 4 oder weniger, Schwefelsäuremonoesterverbindungen und/oder Sulfonsäureverbindungen zugesetzt werden.

Insgesamt bietet der beschriebene Stand der Technik keinen Hinweis darauf, wie mit magnetischen Dispersionen insbesondere mit feinteiligen magnetischen Pigmenten, welche einen BET-Wert von mehr als 35 $m^2/g$ besitzen, eine filtrierfähige Zusammensetzung auch unter üblichen Produktionsbedingungen mit Feinfiltration zu erhalten.

Daher bestand die Aufgabe, für eine magnetische Dispersion, welche die oben angegebenen Dispergierharze enthält, eine Dispersionszusammensetzung zu erhalten, welche bei technisch handhabbarer Fließgrenze eine Filtration auch bei feinporigen Filtern mit $\leqq$ 5 µm Porenweite ermöglicht. Dabei muß die Filtrierbarkeit auch bei längerer Standzeit gegeben sein, außerdem müssen die erforderlichen mechanischen und magnetischen Eigenschaften eines Aufzeichnungsträgers für hohe Aufzeichnungsdichte erfüllt sein.

Es wurde überraschend gefunden, daß die Aufgabe mit einem magnetischen Aufzeichnungsträger gelöst wurde, bestehend aus einem unmagnetischen Schichtträger und mindestens einer darauf aufgebrachten magnetischen Dispersion, bei der feinteilige magnetische Pigmente mit einem BET-Wert von mehr als 35 $m^2/g$ in einem polymeren Bindemittel dispergiert sind und wobei außerdem als Dispergierhilfsmittel ein Phosphorsäureester eingesetzt ist, der den allgemeinen Formeln I und/oder II gehorcht

I 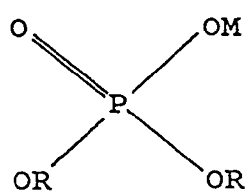

II 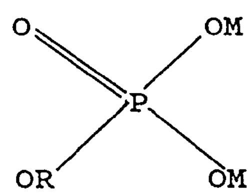

worin

M = H, Na, K, $NR_3'$, $HNR_2'$

R' = R'' = $C_1$ - $C_{22}$ - Alkyl

R = Alkyl $C_2$ - $C_{22}$;
= Phenylalkyl;
= Alkoxyalkyl;
= Alkoxy-Aralkyl;

wobei mindestens ein Teil des polymeren Bindemittels ein Polyalkylenoxid ist, welches wenigstens eine polare, zur Adsorption am magnetischen Pigment befähigte Gruppe enthält.

Durch die erfindungsgemäße Kombination wird die Filtrierbarkeit der magnetischen Dispersion markant verbessert, wobei bereits geringe Zusätze der oben genannten Verbindungen genügen, wie auch aus den nachfolgenden Beispielen hervorgeht.

Im folgenden werden die Dispergierharze näher beschrieben.

Als polare zur Adsorption an der Pigmentoberfläche geeignete Gruppen werden saure, basische und amphotere Gruppen aber auch zur Wasserstoffbrückenbildung befähigte und polarisierbare Gruppen verstanden.

Beispiele saurer Gruppen sind Phosphat- oder Phosphonat-, Sulfat- oder Sulfonat sowie Carboxylgruppen.

Beispiele basischer Gruppen sind primäre, sekundäre oder tertiäre Amine, in Seitenketten gebunden oder in Ringstrukturen oder in die Hauptkette eingebaut.

Amphotere sind Strukturen, die saure und basische Heteroatome oder -atomgruppen in Nachbarschaft enthalten. Als Beispiel seien Betaine, Sulfobetaine, welche beispielsweise aus der EP 0 343 576 bekannt sind sowie Phosphobetaine genannt.

Beispiele von zur Wasserstoffbrückenbildung befähigter Gruppen sind Hydroxyl- und Amidgruppen. Beispiele polarisierbarer Gruppen sind Nitril- und Epoxygruppen.

Als dispergieraktive Verbindungen können Polyalkylenoxide, insbesondere Polyethylen-, Polypropylenoxide, Polyepichlorhydrine und Mischpolyadditionsprodukte der genannten Verbindungen verwendet werden, die wenigstens eine polare zur Adsorption am magnetischen Pigment geeignete Gruppe enthalten.

Als Dispergierharze können auch Kombinationen der vorstehend genannten Polykondensate verwendet werden. Das Molekulargewicht der genannten Verbindungen umfaßt den für Polymere üblichen Bereich und ist nach oben nur durch Löslichkeit in den üblichen, weiter unten noch bezeichneten organischen Lösungsmitteln und durch die technische Handhabbarkeit der Produkte begrenzt. Es umfaßt im Mittel vorzugsweise den Bereich von 800 bis 1 000 000, insbesondere ist bevorzugt 1 200 bis 200 000.

Besonders geeignet für die magnetische Dispersion im Rahmen der vorliegenden Erfindung sind Dispergierharze, die Copolymerisate des Vinylchlorids mit Vinylacetat und Vinylalkohol und/oder Comonomeren, die Carboxyl-, Sulfonsäure-, Phosphonsäure- oder Aminogruppen enthalten, geeignet, weiterhin Polyurethane, die Sulfonsäure-, Phosphonsäure-, Aminogruppen oder stickstoffhaltige Heterocyclen enthalten, weiterhin Polyester-modifizierte Polyamine und Polyalkylenoxid-modifizierte Polyacrylsäuren.

Die vorgenannten Dispergierharze können mit den üblichen polymeren Bindemitteln, wie sie für magnetische Dispersionen aus zahlreichen Veröffentlichungen bekannt sind, gemischt werden, wobei der Anteil des Dispergierharzes am Gesamtbindemittel je nach Art der dispergieraktiven Verbindung zwischen 2 bis 100 % betragen kann.

Weitere Bindemittel für den erfindungsgemäßen magnetischen Aufzeichnungsträger sind beispielsweise Copolymere aus Vinylchlorid, Vinylacetat und Vinylalkohol, Copolymere aus Vinylidenchlorid und Acrylnitril, Polyvinylacetale wie Polyvinylformale, Polyester/Polyurethane, Polycarbonat/Polyurethane, Polyurethan- oder Polyetherelastomere, Phenoxy- oder Epoxyharze, ebenso wie deren Mischungen.

Als Lösungsmittel für alle vorgenannten polymeren Bindemittel können beispielsweise Tetrahydrofuran, Dioxan, Dimethylformamid, Cyclohexanon, Methyl-Ethyl-Keton, Toluol, Methyl-Isobutylketon und andere, gegebenenfalls auch in Mischung, eingesetzt werden.

Die Auswahl der niedermolekularen Phosphorsäureester der allgemeinen Formel I und/oder II folgt aus einer Vielzahl an sich bekannter Verbindungen, von denen nachfolgend einige beispielsweise genannt werden. Die einzusetzende Menge kann jeder Fachmann durch eine entsprechende Anzahl von Versuchen selbst ermitteln, Beispiele hierzu werden weiter unten angegeben. Als besonders geeignet haben sich erwiesen Di-2-ethylhexylphosphat ($C_{16}H_{35}O_4P$) oder Dibutylphosphat ($C_8H_{19}O_4P$).

Selbstverständlich können die genannten Dispergierhilfsmittel auch mit anderen Dispergierhilfsmitteln kombiniert werden, wie beispielsweise hochgereinigtes Lecithin, Cephalin, Fettsäureamine oder -diamine, Fettsäureamide oder -diamide, Fettsäuren beziehungsweise deren Ammoniumsalze, ethoxylierte Fettsäurederivate, aiphatische oder aromatische gegebenenfalls ethoxylierte Phosphorsäureester, Sulfobernsteinsäureester, Sorbitanester, aliphatische oder aromatische Sulfonsäuren oder Sulfonate, Fettalkoholsulfate und andere mehr.

Als magnetisches Pigment werden bevorzugt nadelförmige Teilchen aus Eisen oder eine Eisenlegierung wie Eisencobalt und/oder Eisennickel mit einer durchschnittlichen Teilchenlänge von 0,1 bis 1,0 $\mu m$ und einem BET-Wert von mehr als 35 $m^2/g$ eingesetzt.

Gleichermaßen kann als magnetisches Pigment feinteiliges $\gamma$-$Fe_2O_3$, $Fe_3O_4$, Cobalt-dotiertes $Fe_3O_4$ oder ferromagnetisches Chromdioxid verwendet werden.

Das magnetische Pigment wird in einer geeigneten Menge Lösemittel, mit den oben genannten Bindemittel oder gegebenenfalls Bindemittelmischungen intensiv vermischt unter Zufügung einer geeigneten Menge des oder der genannten Dispergierhilfsmittel gemäß der vorliegenden Erfindung und einer Vordispergierung unterzogen, was zum Beispiel an einem Dissolver, einem Kneter, einer Kolloidmühle, einer Kugelmühle oder anderen hochscherenden Aggregaten durchgeführt werden kann. Die zweite Stufe der Dispergierung erfolgt beispielsweise in einer Perlmühle, deren Mahlintensität durch Variation der Mahlkörpergröße und -füllung, der Drehzahl und der Durchsatzmenge der magnetischen Dispersion gesteuert werden kann. Um eine möglichst enge Pigmentverteilungsbreite zu erhalten, wird vorzugsweise die magnetische Dispersion in mehreren Passagen von einem ersten Vorratsgefäß über eine oder mehrere beispielhaft genannte Perlmühlen in ein zweites Vorratsgefäß gefahren.

Nach Abschluß dieser Feindispergierstufe werden gegebenenfalls weitere polymere Bindemittel oder weitere Additive wie Gleitmittel, Vernetzungsmittel und Vernetzungskatalysatoren der magnetischen Dispersion zugemischt. Die anschließende Beschichtung des unmagnetischen Schichtträgers mit der magnetischen Dispersion erfolgt entsprechend dem Stand der Technik, beispielsweise mittels Reverse-Roll-Coater, Rasterdruck- oder Extrudergießer. Als unmagnetische Schichtträger können Folien aus Polyester, wie Polyethylentherephthalat, Polyolefine wie Polypropylen, Cellulosederivate wie Triacetat, Polycarbonate oder starre Schichtträger aus nichtmagnetischen Metallen wie Aluminium oder keramischen Materialien eingesetzt werden. Die weitere Bearbeitung des magnetischen Aufzeichnungsträgers wie die Oberflächenglättung durch

Kalandrieren, Schneiden und Konfektionieren erfolgt in bekannter Weise.

Die Erfindung wird nachfolgend anhand einiger Beispiele näher beschrieben, ohne jedoch die Erfindung auf die genannten Beispiele zu beschränken.

Beispiel 1

Eine Mischung aus folgenden Bestandteilen wurde hergestellt (alle Angaben beinhalten Gewichtsteile)

Teil 1

| | |
|---|---|
| 25 | Tetrahydrofuran (THF) |
| 0,8 | 25 % Dispergierharz 1 (Vinylchlorid-, Vinylacetat-, Vinylalkohol-Copolymer)-Lösung in THF |
| 1,0 | 20.4 % Polyester-Polyurethan-Lösung in THF |
| 2,4 | 25 % Dispergierharz-2 (carbonsäurehaltiges Polyalkylenoxidacrylat)-Lösung in THF |
| 0,2 | Fettsäuregemisch ($C_{14}$ - $C_{18}$) |
| 10 | feinteiliges nadelförmiges Reineisenpigment (BET-Wert 56 $m^2/g$, Koerzitivwert 120 kA/m, aspect-ratio 5:1) |

Nach 7 Stunden Vordispergierung wurde eine Suspension von

| | |
|---|---|
| 11 | feinteiliges Aluminiumoxid und |
| 2,4 | THF |

zugegeben.

Teil 2

Zu 21,4 der so erhaltenen Vordispersion wurden 0,025 Di(ethylhexyl)-phosphat zugegeben, noch weitere 30 Minuten dispergiert und dann in 7 Passagen in einer Pearlmill feinstgemahlen. Danach wurde eine Mischung aus

| | |
|---|---|
| 1,94 | THF |
| 1,255 | 25 % Dispergierharz-1-Lösung in THF |
| 1,535 | 20,4 % Polyester-Polyurethan-Lösung in THF |

eingerührt und 15 Minuten am Disperser verrührt. Es wurde eine Dispersion mit folgenden Eigenschaften erhalten, wobei die Fließgrenze mit einem Carimed-Gerät gemessen wurde:

| | |
|---|---|
| Glanz: | 66,8 % |
| Feststoffgehalt: | 25,4 % |
| Fließgrenze | 25 Pa |

Die Dispersion wurde über Pall Profile Filter mit 5 µm Porenweite filtriert, wobei 20 l Dispersion in 24 Minuten bei einem maximalen Differenzdruck von 0,4 bar durchgesetzt wurden.

Die Dispersion wurde nach Zugabe eines Vernetzungsmittels (Diisocyanat) auf einen Polyesterschichtträger mit einer Trockenschichtdicke von 3,5 µm vergossen, die magnetischen Teilchen in Längsrichtung ausgerichtet und getrocknet und auf Gebrauchsbreite 8 mm längsgeschnitten. Die Prüfung des so erhaltenen magnetischen Aufzeichnungsträgers ergab folgende Werte:

| | |
|---|---|
| Dropoutzahl: | 10/min |
| Oberflächenrauhigkeit (Ra): | 0,008 µm |

Beispiel 2

Es wurde wie in Beispiel 1 verfahren, jedoch wurde als magnetisches Pigment ein feinteiliges nadelförmiges Eisen-Kobaltpigment mit einem BET-Wert von 52 $m^2/g$, einem Koerzitivwert von 124 kA/m und einem aspect-ratio von 3:1 eingesetzt.

Auch mit dieser Zusammensetzung wurde eine gut filtrierbare Dispersion erhalten, mit der ein magnetischer Aufzeichnungsträger mit vergleichbaren Eigenschaften wie in Beispiel 1 hergestellt wurde.

Beispiel 3

Eine magnetische Dispersion gemäß Beispiel 1, jedoch ohne Dispergierhilfsmittel wurde hergestellt.

Dieser Dispersion wurden steigende Mengen Di-(ethylhexyl)phosphat (DEHP) zugegeben, die untenstehende Tabelle zeigt die erhaltenen Ergebnisse, nämlich die Fließgrenze sowie den Durchsatz der Dispersion bei einer Filtration durch Pall-Filter mit 5 µm Porengröße. Dabei wurde gravimetrisch die Filtratmenge bei einem Differenzdruck von 1,2 bar und einer Meßfläche von 0,7 $cm^2$ bestimmt, welche durchlief, bis das Filter zu 100 % zugesetzt war.

| DEHP | Fließgrenze $\tau_p$ (Pa) | Durchsatz g |
|---|---|---|
| 0,5 % | 24,1 | 8 |
| 1 % | 24,8 | 20 |
| 1,5 % | 25,9 | 30 |
| 2 % | 24,9 | 70 |

Vergleichsbeispiel 1

Eine Dispersion gemäß Beispiel 1, wurde hergestellt, der Zusatz von DEHP im Teil 2 wurde weggelassen. Es wurde eine Dispersion mit folgenden Eigenschaften erhalten:

Glanz: 68,7 %
Festgehalt: 25,4 %
Fließgrenze $\tau$ P 27 Pa

Über ein Pall-Profile-Filter mit 10 µm Porenweite konnte diese Dispersion auch bei Anwendung von 1,2 bar Differenzdruck nicht filtriert werden.

Erst über ein Pall-Profile-Filter mit 15 µm Porenweite konnten 20 l in 32 Minuten bei einem maximalen Differenzdruck von 0,8 bar filtriert werden. Ein aus dieser Dispersion hergestellter magnetischer Aufzeichnungsträger hatte eine Dropout-Rate von 30/min und wies zahlreiche Agglomerationen auf (Figur 1 b) , während ein nach Beispiel 1 hergestellter Aufzeichnungsträger eine glatte Oberfläche hatte (Figur 1 a), wie ein Vergleich beider Aufnahmen (je 50fache Vergrößerung) zeigt.

**Patentansprüche**

1. Magnetischer Aufzeichnungsträger, bestehend aus einem unmagnetischen Schichtträger und mindestens einer darauf aufgebrachten magnetischen Dispersion, bei der feinteilige magnetische Pigmente mit einem BET-Wert von mehr als 35 $m^2/g$ in einem polymeren Bindemittel dispergiert sind und wobei außerdem als Dispergierhilfsmittel ein Phosphorsäureester eingesetzt ist, der den allgemeinen Formeln I und/oder II gehorcht

I 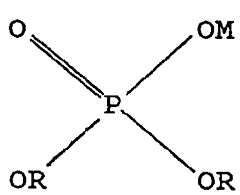 II 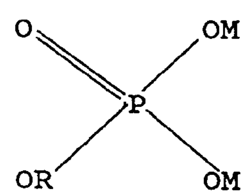

worin

M = H, Na, K, $NR_3'$, $HNR_2'$
R' = R'' = $C_1$ - $C_{22}$ - Alkyl
R = Alkyl $C_2$ - $C_{22}$;
= Phenylalkyl;
= Alkoxyalkyl;
= Alkoxy-Aralkyl;

dadurch gekennzeichnet, daß mindestens ein Teil des polymeren Bindemittels ein Polyalkylenoxid ist, welches wenigstens eine polare, zur Adsorption am magnetischen Pigment befähigte Gruppe enthält.

2. Magnetischer Aufzeichnungsträger nach Anspruch 1, dadurch gekennzeichnet, daß als magnetisches Pigment Eisenpulver oder Eisenlegierungspulver eingesetzt ist.

3. Verfahren zur Herstellung eines magnetischen Aufzeichnungsträgers nach Anspruch 1, dadurch gekennzeichnet, daß
   - in einer ersten Stufe das magnetische Pigment in einem polymeren Bindemittel dispergiert wird, welches zu 2 - 100 % Polyalkylenoxid enthält, welches wenigstens eine polare, zur Absorption im magnetischen Pigment befähigte Gruppe enthält
   - anschließend ein Phosphorsäureester der allgemeinen Formel I und/oder II zugegeben wird

I 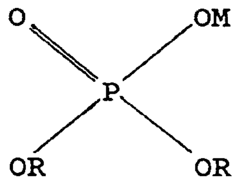 II 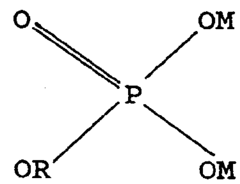

worin

M = H, Na, K, $NR_3'$, $HNR_2'$
R' = R'' = $C_1$ - $C_{22}$ - Alkyl
R = Alkyl $C_2$ - $C_{22}$;
= Phenylalkyl;
= Alkoxyalkyl;
= Alkoxy-Aralkyl;

## Claims

1. A magnetic recording medium comprising a nonmagnetic base and, applied thereto, at least one magnetic dispersion of a finely divided magnetic pigment having a BET value of more than 35 $m^2/g$ in a polymeric binder using a phosphoric ester as dispersant, the phosphoric ester conforming to the general formulae I and/or II:

I 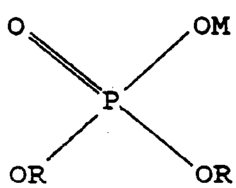 II 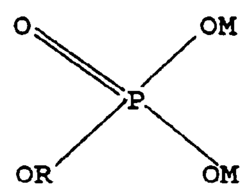

where

M = H, Na, K, $NR_3'$, $HNR_2'$
R' = R'' = $C_1$ - $C_{22}$ - Alkyl
R = Alkyl $C_2$ - $C_{22}$;
= phenylalkyl;
= alkoxyalkyl;
= alkoxy-Aralkyl;

characterized in that at least a portion of the polymeric binder is a polyalkylene oxide which contains at least one polar group capable of adsorption on the magnetic pigment.

2. A magnetic recording medium as claimed in claim 1, characterized in that the magnetic pigment used is iron powder or iron alloy powder.

3. A process for producing a magnetic recording medium as claimed in claim 1, characterized in that
   - in a first stage the magnetic pigment is dispersed in a polymeric binder which contains 2-100% of polyalkylene oxide which contains at least one polar group capable of adsorption in the magnetic pigment

- then a phosphoric ester is added, said phosphoric ester conforming to the general formula I and/or II

I 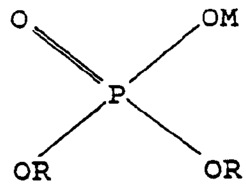 II 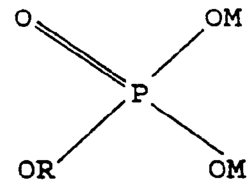

where

| | |
|---|---|
| M | = H, Na, K, $NR_3'$, $HNR_2'$ |
| R' | = R" = $C_1$ - $C_{22}$ - Alkyl |
| R | = Alkyl $C_2$ - $C_{22}$; |
| | = Phenylalkyl; |
| | = Alkoxyalkyl; |
| | = Alkoxy-Aralkyl; |

## Revendications

1. Support d'enregistrement magnétique, composé d'un support de couche non magnétique et d'au moins une dispersion magnétique appliquée dessus, dans laquelle des pigments magnétiques finement divisés, d'une valeur BET de plus de 35 $m^2/g$, sont dispersés dans un liant polymère, en outre un ester d'acide phosphorique est mis en oeuvre comme dispersif, qui répond aux formules générales I et/ou II

   I 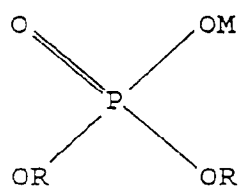 II 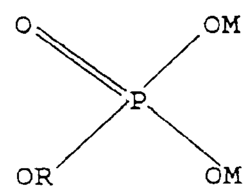

   dans lesquelles

   | | |
   |---|---|
   | M | = H, Na, K, $KR_3'$, $HNR_2'$ |
   | R' | = R" = alkyle en C1 à C22 |
   | R | = alkyle en C2 à C22 ; |
   | | = phénylakyle ; |
   | | = alcoxyalkyle ; |
   | | = alcoxy-aralkyle ; |

   caractérisé par le fait qu'au moins une partie du liant polymère est un polyalkylènoxyde contenant au moins un groupe polaire apte à adsorber sur le pigment magnétique.

2. Support d'enregistrement magnétique selon la revendication 1, caractérisé par le fait que l'on utilise, comme pigment magnétique, de la poudre de fer ou des poudres de ferro-alliages

3. Procédé de préparation d'un support d'enregistrement magnétique selon la revendication 1, caractérisé par le fait que
   - dans un premier stade, on disperse le pigment magnétique dans un liant polymère qui contient entre 2 et 100 % de polyalkylènoxyde présentant au moins un groupe polaire apte à adsorber sur le pigment magnétique,
   - on ajoute ensuite un ester d'acide phosphorique de formule générale I et/ou II

I 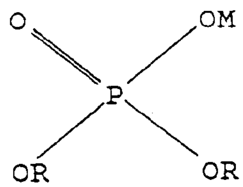 II 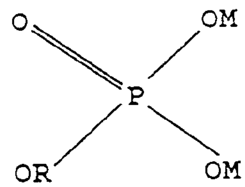

dans lesquelles

| | |
|---|---|
| M | = H, Na, K, $NR_3'$, $HNR_2'$ |
| R' | = R" = alkyle en C1 à C22 |
| R | = alkyle en C2 à C22 ; |
| | = phénylakyle ; |
| | = alcoxyalkyle ; |
| | = alcoxy-aralkyle ; |

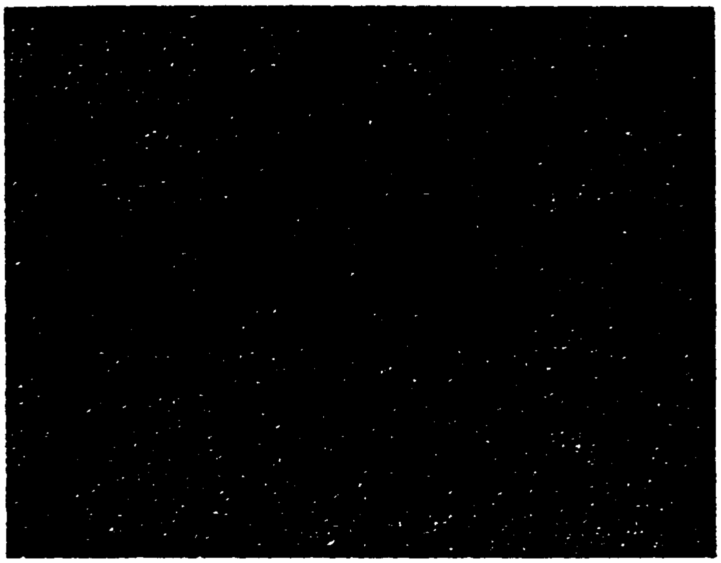

Figur 1 a

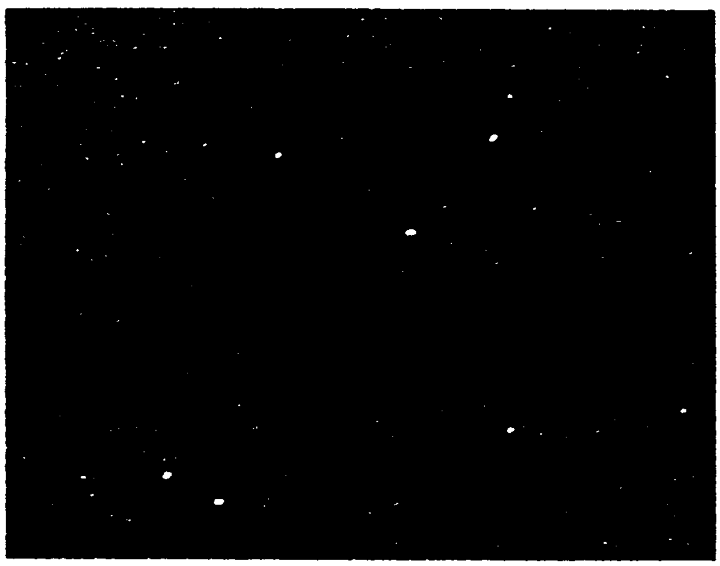

Figur 1 b